# EUROPEAN PATENT APPLICATION

(11) **EP 4 357 925 A1**
(43) Date of publication of application: **24.04.2024**
(21) Application number: 23178239.2
(22) Date of filing: 08.06.2023
(51) Int. Cl.: G06F 11/34, G06N 20/00

(54) **METHOD AND DEVICE FOR FINDING CAUSALITY BETWEEN APPLICATION INSTRUMENTATION POINTS**

(30) Priority: 19.10.2022 KR 20220135181
(71) Applicant: Samsung Electronics Co., Ltd., Suwon-si, Gyeonggi-do 16677 (KR)
(72) Inventor: JO, Jae-Eon, Suwon-si 16678 (KR); MYUNG, Rohyoung, Suwon-si 16678 (KR); ÅHLMAN, Hans Gustav, Suwon-si 16678 (KR)
(74) Representative: Arnold & Siedsma

(57) **Abstract**

An electronic device includes: one or more processors; a memory storing instructions configured to cause the one or more processors to: install instrumentation points in respective tasks of an application, the instrumentation points including a source instrumentation point installed in a source task and a target instrumentation point installed in a target task, wherein the source task and the target task are configured to execute in parallel on the one or more processors, and wherein each task includes a respective sequence of instructions executable by the one or more processors, and determine a measure of a causal relationship between the source instrumentation point and the target instrumentation point based on observation of a delay in the target instrumentation point induced by a delay amount generated by the source instrumentation point.

## Description

### BACKGROUND

### 1. Field

The following description relates to an electronic device and a processor-implemented method. The description further relates to finding causality between instrumentation points of an application.

### 2. Description of Related Art

Various applications use multithreading. A multithreaded program may provide an environment in which tasks or execution units (e.g., threads, processes, etc.) are executed in parallel on multiple processors. In computer programming, a thread, for example, is a well-known unit of execution within which requests, for example, may be simultaneously processed. For example, threads are typically used to respond to user inputs and to process service requests.

When various operations are to be simultaneously performed, threads may be generated and managed in response to the simultaneous operations. As is often the case, the threads generated for multiple operations may have mutual interference and interdependence. For example, an operation of a thread may be delayed until an operation of another thread is completed. The same applies to multi-processing where processes are the mechanism for concurrency, for example, by forking processes.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic device includes: one or more processors; a memory storing instructions configured to cause the one or more processors to: install instrumentation points in respective tasks of an application, the instrumentation points including a source instrumentation point installed in a source task and a target instrumentation point installed in a target task, wherein the source task and the target task are configured to execute in parallel on the one or more processors, and wherein each task includes a respective sequence of instructions executable by the one or more processors, and determine a measure of a causal relationship between the source instrumentation point and the target instrumentation point based on observation of a delay in the target instrumentation point induced by a delay amount generated by the source instrumentation point.

The instructions may be further configured to cause the one or more processors to: select the source task from among the tasks of the application, select the source instrumentation point based on it being in the selected source task, determine the delay amount, and predict timestamps of instrumentation points to be executed in the source task after a delay of the source instrumentation point, wherein the delay may be determined based on the determined delay amount.

The instructions may be further configured to cause the one or more processors to train a model to predict an inter-arrival time between visits to an instrumentation point based on detection of a mismatch between a timestamp recorded by the instrumentation point and a timestamp predicted for the instrumentation point, wherein an inter-arrival time corresponds to a time between arrivals at the instrumentation point.

The instructions may be further configured to cause the one or more processors to select an instrumentation point having a variance of an inter-arrival time that exceeds a threshold variance to be the source instrumentation point from among the installed instrumentation points.

The instructions may be further configured to cause the one or more processors to determine the delay amount based on a distribution of inter-arrival times of the target instrumentation point.

The instructions may be further configured to cause the one or more processors to gradually increase the delay amount for the source instrumentation point from a minimum delay amount that may be determined based on a distribution of inter-arrival times of the target instrumentation point.

The measure of the causal relationship may correspond to a degree of a causal relationship between the delay amount generated by the source instrumentation point and the observed delay of the target instrumentation point.

The instructions may be further configured to cause the one or more processors to determine the measure of the causal relationship based on a comparison between a probability that a recorded timestamp for the target instrumentation point follows an original distribution of the target instrumentation point and a probability that the recorded timestamp for the target instrumentation point follows a delayed distribution of the target instrumentation point.

The instructions may be further configured to cause the one or more processors to: collect time information of the instrumentation points by iteratively executing the application, estimate a predicted timestamp of an instrumentation point other than the source instrumentation point based on an analysis of the collected time information, and select the target instrumentation point based on a mismatch between a recorded timestamp thereof and the predicted timestamp.

The instructions may be further configured to cause the one or more processors to collect the time information for each of the plurality of instrumentation points identified based on calling context information.

The instructions may be further configured to cause the one or more processors to: train, by using the collected time information, a sequence predictor model that may be set to output, for each instrumentation point, information of a respective inter-arrival time from a last visit time point of the instrumentation point to a subsequent visit time point, and predict a next visit time point by using the trained sequence predictor model for the instrumentation points.

The instructions may be further configured to cause the one or more processors to: perform clustering inter-arrival times including a new inter-arrival time for an instrumentation point, based on an arrival at the instrumentation point, train a sequence predictor model based on a result of clustering the inter-arrival times, and obtain a distribution of the inter-arrival times for each cluster.

The instructions may be further configured to cause the one or more processors to: generate a profile configured to control a processor core setting or a processor core allocation based on the causal relationship measure.

In one general aspect, a method is implemented by a processor, the method includes: installing instrumentation points in an application including tasks, wherein each of the tasks may be a sequential stream of instruction; and determining causality information between a source instrumentation point and a target instrumentation point based on observation of a delay in the target instrumentation point triggered by a delay in the source instrumentation point among the plurality of instrumentation points.

The determining of the causality information may include: selecting a source task from among the tasks of the application; selecting the source instrumentation point based on it being in the source task; determining a delay amount to be applied to the source instrumentation point; and generating a predicted timestamp of instrumentation points to be executed in the source task after a delay in the source instrumentation point, wherein the delay may be determined based on the determined delay amount.

The determining of the causality information may include: collecting time information of the plurality of instrumentation points based on iteratively executing the application; estimating a predicted timestamp of an instrumentation point that may be not the source instrumentation point based on an analysis of the collected time information; and determining an instrumentation point in which a mismatch between a recorded timestamp and the predicted timestamp may be observed to be the target instrumentation point among the instrumentation points.

In on general aspect, a method includes: inserting instrumentation code into execution units of an application, wherein the execution units are processes or threads some of which are configured to execute in parallel with respect to each other, the execution units including a source execution unit including inserted source instrumentation code and a target execution unit including inserted target instrumentation code; executing the application, including: executing the source instrumentation code, wherein each time the source instrumentation code may be executed it induces pause times of pausing execution of the source execution unit; executing the target execution unit, wherein each time the target instrumentation code may be executed a visit time may be captured for the target execution unit, wherein each visit time corresponds to a time at which the target instrumentation code may be executed; and determining an extent to which the visit times are affected by the pause times.

The pause times may vary randomly, and the extent may be determined based on a distribution of the pause times and a distribution of the visit times.

A second execution unit may include second target instrumentation code, executing the application may further include executing the second target instrumentation code which captures second visit times of the second target instrumentation code, and the method may further include determining an extent to which the second visit times are affected by the pause times.

The method may further include determining that the target execution unit may be causally related to the source execution unit based on the extent to which the visit times are affected by the pause times; and determining that the second target execution unit may be not causally related to the source execution unit based on the extent to which the second visit times are affected by the pause times.

Other features and aspects will be apparent from the following detailed description, the drawings, and the claims.

### BRIEF DESCRIPTION OF THE DRAWINGS

FIG. 1 illustrates an example of a task of an application, according to one or more embodiments.
FIG. 2 illustrates an example of a causality analysis method, according to one or more embodiments.
FIG. 3 illustrates an example of installing an instrumentation point, according to one or more embodiments.
FIG. 4 illustrates an example of an instrumentation point inserted into source code.
FIG. 5 illustrates an example of collecting and using timestamp information for instrumentation points, according to one or more embodiments.
FIG. 6 illustrates examples of collecting call information with instrumentation, according to one or more embodiments.
FIG. 7 illustrates details of timestamp collection and training based thereon, according to one or more embodiments.
FIG. 8 illustrates statistical information derived from instrumentation, according to one or more embodiments.
FIG. 9 illustrate an example of applying a delay to a source instrumentation point to measure causality, according to one or more embodiments.
FIG. 10 illustrates differential effects of an artificial instrumentation delay, according to one or more embodiments.
FIG. 11 illustrates an example of calculating a causality score, according to one or more embodiments.
FIG. 12 illustrates an example of distributing a profile generated based on causality information, according to one or more embodiments.
FIG. 13 illustrates an example configuration of an electronic device, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As nonlimiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

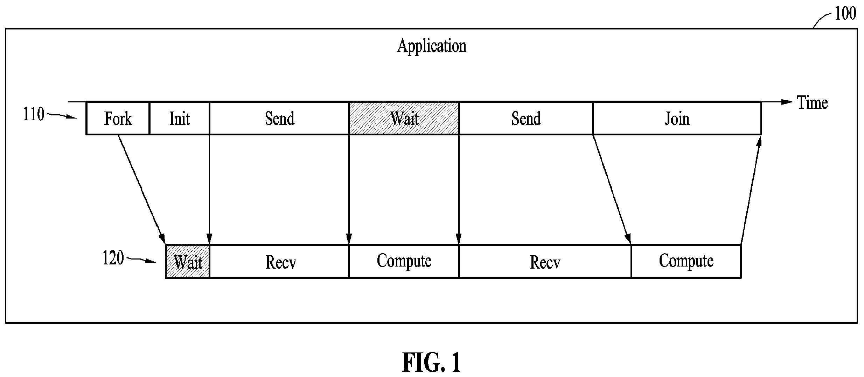

FIG. 1 illustrates an example of a task of an application.

A task generally includes a stream or sequence of instructions. A task, which may also be referred to as an execution unit, is any unit of execution managed by an operating system as a unit of execution that may execute in parallel with one another, be launched and terminated, and so forth. A task may be, for example, a thread (lightweight or not), a process, etc. For example, at the operating system level, a task may be a thread and in a message-passing interface (MPI) implementation, a task may be a process with a rank (a rank being an index of a process). However, the tasks described herein are not limited to threads and processes, for example, in a data center using a multi-tier application, an individual application may be a task. The example application 100 shown in FIG. 1 is an example of a multitasking application, i.e., one including multiple parallel tasks. The application 100 may be a distributed application with instances or processes executing on different hosts (or virtual machines), or the like.

In the application 100 (e.g., a multitask application) in which tasks are executed in parallel, an arbitrary task of the application may be executed (launched, invoked, etc.) by another task of the application. The two tasks described above may or may not have a causal relationship with each other. A causal relationship is one in which a first event in a first task is required to cause a second event in a second task. A causal relationship may also be referred to as a dependency; the execution of one task may depend on the execution of another task. Herein, an event may be any operation executed in a task. A causality may occur when an operation in an arbitrary task is dependent on an operation in another task. A causality may also be referred to as a dependency. For example, when on task needs to exchange data with another task, there is a causal relationship between them. That is, the execution of one depends on the other. Described herein are uses of instrumentation points executed by different tasks to collect data that may be used to analyze and identify causal relationships between tasks or execution units of an application.

Identification of causal relationships can have many uses, for example, to predict the total execution time of a multitasking application such as application 100. In a non-multitasking application, the total execution time of the application may be calculated by multiplying a time for executing a command in the application by an iteration count of the command. On the other hand, in the case of a multitasking application such as application 100, calculation of the execution time is not straightforward. For one reason, the total execution time of the application may include the execution of various tasks in parallel. In addition, execution time may be difficult to compute since a preceding operation may need to be completed in one task before a subsequent operation in a causally related other task can be executed. As another example, causal relationships may be identified and/or quantified to facility managing computing resources for an application, for example by generating an execution or workload profile.

Consider the example application 100, with a main task 110 and a worker task 120. General types of operations are labeled in the tasks. For example, a "Send" operation may involve emitting data, and a "Recv" operation may involve receiving the emitted data. Other operations of the main task 110 and worker task 120 are explained by their labels in FIG. 1. Referring to the application 100, the execution time of a "Send" operation, which contributes to the total execution time of the main task 110, may include time spent waiting for a "Recv" operation (corresponding to and causally dependent on the "Send" operation) to be ready in a worker task 120. That is, when the main task 110 reaches "Send", the main task 110 may block until the "Recv" is ready in the worker task 120. Similarly, the worker task 120 may block at the "Send" until the "Recv" is ready in the main task 110. As can be seen, the execution time of an arbitrary task may include a component or portion of execution that is induced by (caused by) another causally related task. Many types of such interdependence and interaction cases may occur among parallel tasks of an application.

An electronic device according to an example may provide information that can be used, for example, to improve accuracy of a simulation of operations of the application 100, by analyzing execution times of tasks obtained collected by instrumentation points inserted into the tasks. For example, the electronic device may generate causality information between instrumentation points inserted in commands, as described below. The causality information may be a determination of an existence of, and/or degree of, a causal relationship (i.e., an execution/performance dependency) between tasks of an application. The electronic device may automatically generate a dependency graph representing causalities between instrumentation points (and therefore correspondingly associated tasks) based on the generated causality information. The electronic device may automatically generate a workload model for a new workload by using causality information generated for the new workload. In addition, the electronic device may be able to generate causality information without prior knowledge of the application. For example, it may not be necessary to understand function names and transfer factors of the application. In addition, the electronic device may not need to individually analyze a new application programming interface (API) at a code level in order to analyze the causality information described above. In some embodiments, the electronic device may also analyze instrumentation-provided data to determine causality information between applications in a multi-tier application executing in a data center, for example (i.e., distributed applications).

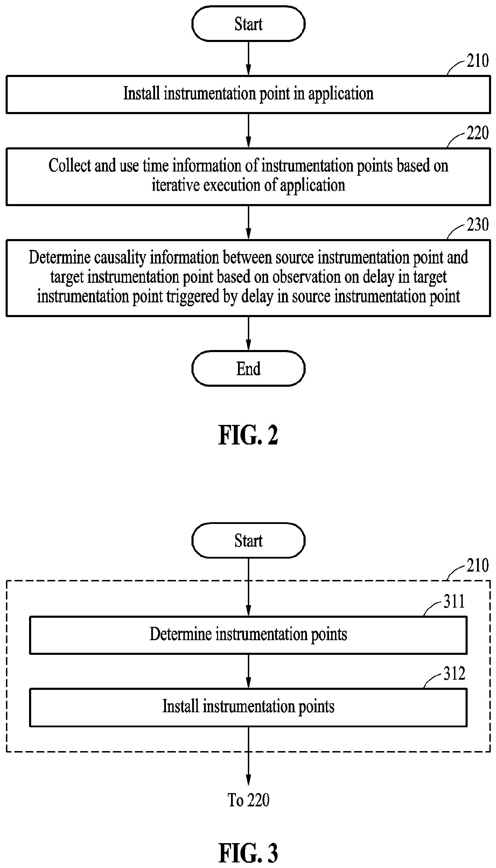

FIG. 2 illustrates an example of a causality analysis method. Operations described with reference to FIG. 2 are not limited to being performed in the described order and may vary depending on a design. Some of the described operations may be omitted, another operation may be added, and the order of operations may vary.

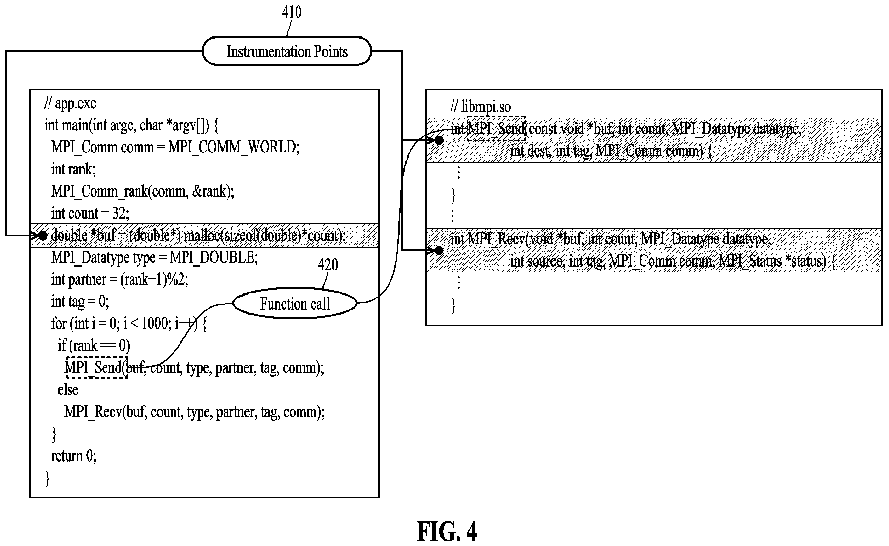

In operation 210, an electronic device may install or insert instrumentation points in an application. Installation of instrumentation points is described with reference to FIGS. 3 and 4. Briefly, an instrumentation point may be any mechanism by which execution flow includes (or is diverted to) instrumentation code that may impose artificial delays (e.g., random delay durations), collect data such as call stack information and time information (e.g., timestamps), etc. It may be convenient to insert instrumentation points at certain commands, for example, at debugger breakpoints. Regarding insertion of instrumentation points, if source code is available and modifiable, instrumentation points may be easily inserted in the source code (e.g., with compile-time macros). Alternatively, techniques for inserting instrumentation code into compiled code are known and may also be used. For example, various debuggers, development tools, libraries, and so forth may be used to insert instrumentation points. The locations of instrumentation points may be determined in various ways. For example, instrumentation points may be inserted randomly, may be based on function order (e.g., higher or lower), etc. For faster analysis, meaningless instrumentation points may be identified and removed (described below). As used herein, depending on context, the term "instrumentation point" may refer to either a location of an inserted instrumentation code (or call), or to the execution of instrumentation code.

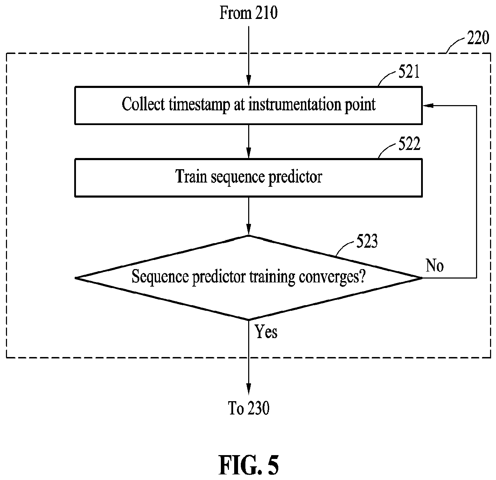

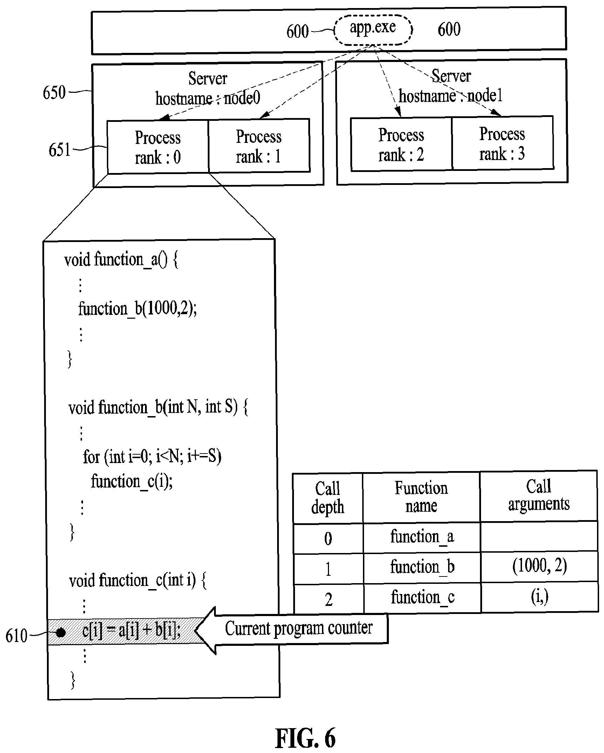

In operation 220, the electronic device may collect and use time information of the instrumentation points using iterative execution of the application. Regarding collection, for example, while executing the application, whenever the execution of the application reaches an instrumentation point installed in operation 210, execution of (or linked to) the instrumentation point may record time information (e.g., a timestamp) for when the instrumentation point is reached and calling context information (e.g., call stack information) in effect when the instrumentation point is reached. The calling context information may be information about the context of calls corresponding to where the instrumentation point is installed. Calling context information is described with reference to FIG. 6. When the application is sufficiently and iteratively executed, a periodicity may be shown in (derived from) time information (e.g., an inter-arrival time (IAT)) of the calling contexts of the respective instrumentation points. The electronic device may predict an IAT through a sequence predictor model (e.g., a model based on machine learning) that learned the periodicity of the time information. For reference, prediction of a next timestamp of encountering an instrumentation point during execution of the application, which is described below, may be performed by a trained sequence predictor model based on time information for each instrumentation point collected in operation 220. Use of the sequence predictor model is described below with reference to FIG. 5.

In operation 230, the electronic device may determine causality information between a source instrumentation point and a target instrumentation point based on an observed delay at (or associated with) the target instrumentation point triggered by an artificially imposed delay at the source instrumentation point. The source instrumentation point is an instrumentation point at which execution of a command is artificially delayed (e.g., by a wait command, e.g., performed by the source execution point) by the electronic device. The source instrumentation point may be any of the instrumentation points previously inserted into the application. The target instrumentation point may be an instrumentation point for which execution (e.g., of a task including the target instrumentation point) is delayed (and observed) due to the delay in/at (and caused by) the source instrumentation point, which, when there is a causal relationship between the source and target instrumentation points, may cause delay in the target observation point (or specifically, a task containing same). For example, the electronic device may select a source task from among available tasks and may select a source instrumentation point of the source task from the plurality of instrumentation points based on the source instrumentation point being in the source task. While executing the application, the source instrumentation point (e.g., instrumentation code included/associated therewith) may temporarily artificially delay execution at the source instrumentation point (e.g., with a wait command). The electronic device may determine/identify an instrumentation point (e.g., the target instrumentation point) as having a causal relationship with (or dependence upon) the source instrumentation point (or source task) based on a predicted timestamp, which is a timestamp predicted with respect to the target instrumentation point by considering a delay of execution, and a timestamp taken after resuming the execution.

A timestamp of an instrumentation point may be a time point when the instrumentation point is executed (e.g., when execution reaches the instrumentation point, when the instrumentation code of the instrumentation point is executed, etc.). That is, a timestamp of an instrumentation point is a timestamp taken that corresponds to a time when execution reaches the instrumentation point. A predicted timestamp of the instrumentation point may be a predicted time point to visit or arrive at the instrumentation point after performing an instrumentation-induced delay. Herein, a visit to or arrival at the instrumentation point refers to execution reaching the instrumentation point.

A predicted timestamp may be predicted for each instrumentation point. A predicted timestamp for a given instrumentation point may be predicted based on whether the given instrumentation point is executed in the same task as the source instrumentation point (e.g., if the given instrumentation point is not in the same task, then a predicted timestamp may be generated). Note that "timestamp" is used to refer to both actual timestamps captured during execution and times at which it is predicted that execution will visit an instrumentation point. In the latter case, "predicted timestamp" is a phrase referring to a predicted time, which is not an actual timestamp generated during/by execution of the application.

For ease of description, an instrumentation point installed in the same task (e.g., a source task) as the source instrumentation point will be referred to as a first instrumentation point. An instrumentation point installed in a task other than the source task will be referred to as a second instrumentation point.

For example, execution of a task at a first instrumentation point may be delayed by the same amount of delay as the source instrumentation point. Accordingly, the electronic device may predict a predicted timestamp of the first instrumentation point based on a visit pattern (e.g., an IAT or a distribution of IATs) shown in the time information collected in operation 220 and the amount of delay. For example, the electronic device may predict the predicted timestamp by using a sequence predictor model (e.g., the sequence predictor model of FIG. 5) that learned the visit pattern (e.g., an IAT).

It may be noted that, there usually is no actual causal relation between a source instrumentation point and a second instrumentation point when execution of the second instrumentation point is not delayed despite a delay in the source task. In other words, lack of a delay relationship between a source instrumentation point and a second instrumentation point indicates a lack of a causal relationship (or dependence) between the respective tasks of the instrumentation points. A timestamp at a second instrumentation point that does not have a causal relationship with a source instrumentation point is usually independent from (not affected by) the delay at the source instrumentation point. That is to say, a second instrumentation point that does not have a causal relationship with the source instrumentation point may have a timestamp that follows the visitation pattern of the second instrumentation point's time information collected in operation 220. Regardless of the delay in the source task described above (which may vary randomly), a predicted timestamp of the second instrumentation point (predicted based on its visitation pattern) may match an actual timestamp of the second instrumentation point.

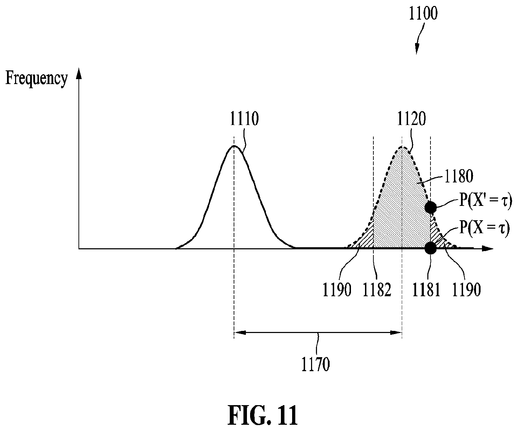

As described above, the electronic device may determine, for each second instrumentation point (e.g., instrumentation points not in the source task), which have a causal relationship with the source instrumentation point by comparing their predicted timestamps thereof with their actual/recorded timestamps. For example, for second instrumentation point's predicted timestamp coincides with its recorded timestamp, the electronic device may determine that the second instrumentation point (and by implication, its task) is independent from the source instrumentation point (and by implication, the source task) and does not have a causal relationship with the source instrumentation point, since its timing/delay is not affected by the timing/delay of the source instrumentation point (which may randomly vary, e.g., with a Gaussian distribution). In another example, for a second instrumentation point of a task that is different from the source task, when the electronic device observes discordance between the second instrumentation point's predicted timestamp and its recorded (runtime-captured) timestamp, the electronic device may determine that the second instrumentation point has a causal relationship with the source instrumentation point. The second instrumentation point having a causal relationship with the source instrumentation point may be referred to as the target instrumentation point. The timestamp of the second/target instrumentation point (having a causal relationship with the source instrumentation point) may be delayed due to delay in the source instrumentation point (e.g., the delay of the source task causes the second/target instrumentation point's task to commensurately delay). The target instrumentation point may have a timestamp that is delayed by an amount of delay induced by the source instrumentation point in addition to the delay of the visit pattern in the collected time information of the target instrumentation point. Accordingly, discordance between the second/target instrumentation point's predicted timestamp and its recorded timestamp may indicate that the second instrumentation point potentially has a causal relationship with the source instrumentation point. The electronic device may determine that there is potentially a causal relationship between the source instrumentation point and the target instrumentation point. Determination of a causal relationship between a source instrumentation point and a target instrumentation point is described with reference to FIG. 11.

FIGS. 3 and 4 illustrate an example of installing an instrumentation point.

Operations described with reference to FIG. 3 are not limited to being performed in the described order and may vary depending on implementation details. Some of the described operations may be omitted, another operation may be added, and the order of operations may vary.

In operation 311, the electronic device may install instrumentation points 410. For example, the electronic device may select commands from among commands, statements, operations, or the like included in an application and insert instrumentation points thereat. For example, the commands may be debugger commands, instructions related to parallel execution (e.g., locks, thread instantiations, etc.). In some implementations the electronic device may randomly select the locations to insert the instrumentation points 410. In addition, the electronic device may change a call depth to arrange the instrumentation points 410. For example, the electronic device may reduce an analysis overhead by placing instrumentation points 410 at commands corresponding to a higher order function than a function of an initially selected instrumentation point 410. In another example, the electronic device may increase an analysis resolution by placing the instrumentation points 410 at commands corresponding to a lower order function than a function of an initially selected instrumentation point 410.

In operation 312, the electronic device may install the instrumentation points at the determined locations in the application. For example, the electronic device may install an instrumentation point 410 by modifying source code, when available. The electronic device may add API function call syntax to the source code of the application, where the API function call syntax is provided to a developer to directly interact with a causal relationship analysis framework, for example. In another example, the electronic device may also (or alternatively) install instrumentation points 410 without modifying the source code. The electronic device may install instrumentation points 410, for example, by using a GNU project debugger (GDB) breakpoint in a GDB Python interface and a GDB machine interface. However, implementations are not limited thereto, and the electronic device may install instrumentation points 410 based on library interposer, uprobe + Berkeley packet filter (BPF) (sleepable), user space dtrace (USDT), or binary translation, to name some examples. As described above, an implementation method using a debugger may install the instrumentation point 410 without modifying the source code (and without requiring re-compiling of the application).

FIG. 4 illustrates an example of an instrumentation point inserted into source code. When execution of a command in which the instrumentation point/location is installed occurs (or when generally the instrumentation point is reached and instrumentation code of the instrumentation is executed), time information may be collected in a manner described with reference to FIG. 5, for example. Herein, an example in which a location of an instrumentation point is set to the location of a function call 420 is described. However, examples are not limited thereto, and other arbitrary commands/locations may be used as the instrumentation point locations.

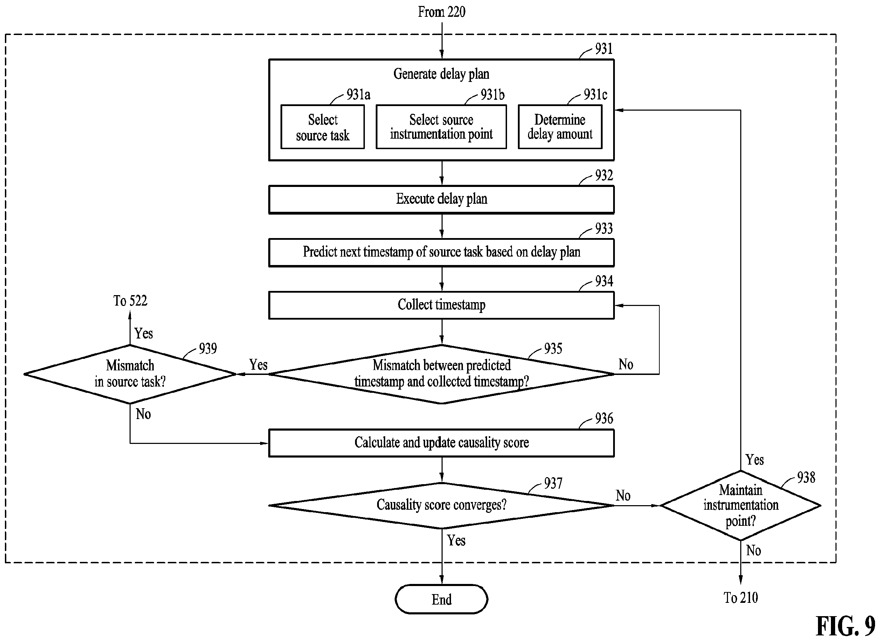

For reference, for faster analysis, meaningless (e.g., low causal relationship) instrumentation points 410 may be removed during an analysis. Removing instrumentation points 410 is described below with reference to FIG. 9.

FIGS. 5 to 8 illustrate an example of collecting and using time information for instrumentation points.

FIG. 5 illustrates an example of an operation to collect and use time information for each instrumentation point (e.g., among all of, or a subset of the instrumentation points). Operations described with reference to FIG. 5 are not limited to being performed in the described order and may vary depending on a design. Some of the described operations may be omitted, another operation may be added, and the order of operations may vary.

In operation 521, an electronic device may collect a timestamp at an instrumentation point. The electronic device according to an example may collect time information of instrumentation points by iteratively executing an application 600. When the electronic device collects time information for each of the instrumentation points, it may also collect calling context information. For example, while executing the application 600, the electronic device may record a timestamp indicating a visit time to an instrumentation point and may record calling context information. FIG. 6 illustrates examples of collecting calling context information using instrumentation. For example, a host name 650, a task identification (ID) 651 (e.g., an ID of a process rank), a call depth of a function, a function name, and a call argument of a function may be used as the calling context information. In the example of FIG. 6, a call depth of a function function_a may be 0 and a call argument may not exist. A call depth of a function function_b may be 1 and a call argument may be (1000, 2). A call depth of a function function_c may be 2 and a call argument may be i. In FIG. 6, since an instrumentation point 610 is located in the function function_c, the instrumentation point's 610 calling context information may be that of the function function_c. Table 1 shows an example of time information collected and recorded with the context information for the example instrumentation point 610.

**Table 1**

| Calling Context | LVT | IATs | IAT Distributions | CIDs | Predicted Next CID |
|---|---|---|---|---|---|
| ('node0', 100, ('main', 'MPI_Send', OxaO), (0x81,32,4,1,0,2)) | 20000 | [105, 95, 1002, 102, 93, 1004] | {0: N(98.8, 4.92), 1: N(1003, 1)} | [0 0 1 0 0 1] | 0 |
| ('node1', 101, ('main', 'MPI_Recv', 0x80), (0x82,32,4,1,0,2)) | 20010 | [102, 99, 1000, 98, 106, 1002] | {0: N(101.3, 3.1), 1: N(1001, 1)} | [0 0 1 0 0 1] | 0 |

In Table 1, calling context information includes (hostname, threadID, callstack, funcArgs), for example, although context information may be recorded. The calling context information may be any information (e.g., a type of identifier) indicating an installed instrumentation point's calling point. Even for the same instrumentation point, the instrumentation point may have different called contexts (e.g., a case in which a function is called by different functions at different depths). In an example of the first row of Table 1, the calling context information is ('node0', 100, ('main', 'MPI_Send', OxaO), (0x81,32,4,1,0,2)). In the row, the host name hostname may be 'node0'. The thread ID is 100. A call stack is ('main', 'MPI_Send') representing that a 'main' function and an 'MPI_Send' function have been called, and in that order. The value 0xa0 is a relative address of a command (or code location of the instrumentation point) in the lowest order function. The relative address of the command may also be used to distinguish an instrumentation point. The set of values (0x81,32,4,1,0,2) represents an argument given to a function in which the instrumentation point 610 is installed. For example, since a target process rank of a function may vary depending on a function call argument in the example of FIG. 6, even if an instrumentation point is installed in the same command, the instrumentation point may be distinguished for a different function call argument. The function call argument may be collected, for example, when using a GDB breakpoint method.

The type/content of calling context information is not limited to the example of FIG. 6. A command address may be additionally used as the calling context information. Since an operation may vary depending on the calling context even in the case of the same command or the same function, an electronic device may collect time information related to execution of a command of the instrumentation point by distinguishing the time information based on the calling context information.

In the example of Table 1, the time information collected for each calling context information described above may include a last-visit timestamp (LVT), IATs, an IAT distribution, a cluster ID (CID), and/or a predicted next CID.

The LVT may be a timestamp indicating a last visit time point or an arrival time point at the instrumentation point identified by the calling context information. In the example of Table 1, an LVT lastly recorded at an instrumentation point identified by context information of ('node0', 100, ('main', 'MPI_Send', OxaO), (0x81,32,4,1,0,2)) may be a timestamp of 20000. When a unit of timestamp is nanosecond (ns), the timestamp of LVT described above is 20000 ns, for example.

The IAT may be a sequence of a time interval of the visited (arrived at) instrumentation point identified by (or associated with) the calling context information. In the example of Table 1, time intervals of arrival at the instrumentation point identified by the context information of ('node0', 100, ('main', 'MPI_Send', OxaO), (0x81,32,4,1,0,2)) is a sequence of [105, 95, 1002, 102, 93, 1004]. For example, a time interval between a first visit timestamp and a second visit timestamp for the instrumentation point is 105, a time interval between the second visit timestamp and a third visit timestamp is 95, and a time interval between the third visit timestamp and a fourth visit timestamp is 1002. For example, an IAT for an instrumentation point may have a pattern of visiting the instrumentation point twice at about a time interval of 100 and visiting once at about a time interval of 1000.

The visit pattern (e.g., a pattern represented by a sequence of an IAT) for the instrumentation point described above may be modeled as an IAT distribution and a CID sequence (e.g., CIDs). An IAT distribution may be information representing a distribution of repeated IATs for the same instrumentation point. The electronic device may obtain a mean value and a variance value of IATs based on a distribution by fitting collected IATs for the instrumentation point to the distribution (e.g., a normal distribution). Noise resistance may increase compared to an example in which an IAT is recorded by a discrete timestamp. For reference, an example of a normal distribution is mainly described herein. However, examples are not limited thereto. When an arrival process corresponds to a Poisson process, the IAT may follow an exponential distribution.

As in the example of Table 1, IATs for an instrumentation point identified by uniquely identified by their respective calling context information and may be mixed with different distributions. The electronic device may perform clustering on IATs collected for the instrumentation point into one or more clusters and may obtain distribution information (e.g., a mean value and a variance value) for each cluster. For example, the electronic device may obtain distribution information by fitting one instrumentation point identified by one calling context to a corresponding single Gaussian normal distribution. As a result of fitting collected IATs to a normal distribution, the electronic device may attempt clustering for the collected IATs when the variance value exceeds a threshold variance. When a plurality of clusters is formed for the collected IATs, the electronic device may generate a Gaussian distribution for IATs belonging to each of the clusters. For example, in Table 1, an IAT distribution for an instrumentation point identified by context information of ('node0', 100, ('main', 'MPI_Send', OxaO), (0x81,32,4,1,0,2)) may be represented by {0: N(98.8, 4.92), 1: N(1003, 1)}. Here, N() is a symbol representing a normal distribution. '0: N(98.8, 4.92)' may represent that a mean value of IATs belonging to the 0th cluster is 98.8 and the IATs are distributed by a variance value of 4.92. '1: N(1003, 1)' may represent that a mean value of IATs belonging to the first cluster is 1003 and the IATs are distributed by a variance value of 1.

The CID sequence may be a sequence in which clusters of IATs are observed in an IAT distribution. For example, in Table 1, a CID sequence for an instrumentation point identified by unique context information of ('node0', 100, ('main', 'MPI_Send', OxaO), (0x81,32,4,1,0,2)) may be [001001]. The CID sequence of [0 0 1 0 0 1] represents sequentially recorded cluster inter-visit times; inter-visit time 105 belongs to the 0th cluster, inter-visit time 95 belongs to the 0th cluster, inter-visit time 1002 belongs to the first cluster, inter-visit time 102 belongs to the 0th cluster, inter-visit time 93 belongs to the 0th cluster, and inter-visit time 1004 belongs to the first cluster. In the example of Table 1, the IATs of 105, 95, 102, and 93 belong to the 0th cluster (e.g., a cluster having a distribution of N(98.8, 4.92)) and the IATs of 1002 and 1004 belong to the first cluster (e.g., a cluster having a distribution of N(1003, 1)). The CID sequence may be used to train a sequence predictor model, which is described below.

A predicted next CID may be a result of predicting a cluster to which an inter-visit time from the last visit timestamp to the next visit to the instrumentation point belongs. The electronic device may predict the next CID by using a trained sequence predictor model. In the example of Table 1, a next CID predicted for an instrumentation point identified by context information of ('node0', 100, ('main', 'MPI_Send', OxaO), (0x81,32,4,1,0,2)) may be 0. Referring to the CID sequence, a pattern of the 0th cluster, then the 0th cluster, and then the first cluster is repeated, and thus, it may be expected that the next CID may be the 0th cluster. Accordingly, the electronic device may predict the subsequent timestamp for instrumentation points based on an analysis of collected time information. For example, the sequence predictor model may be trained based on a result of analyzing the collected time information. By using the trained sequence predictor model, the electronic device may identify a cluster to which the subsequent inter-visit time for the instrumentation point belongs, as described above. The electronic device may estimate a predicted timestamp of instrumentation points by adding the inter-visit time corresponding to the identified subsequent cluster to the LVT. In the example of Table 1, since a mean value of the 0th cluster, which is the predicted next CID, is 98.8 and the LVT is 20000, the electronic device may predict that a subsequent timestamp is 20098.8.

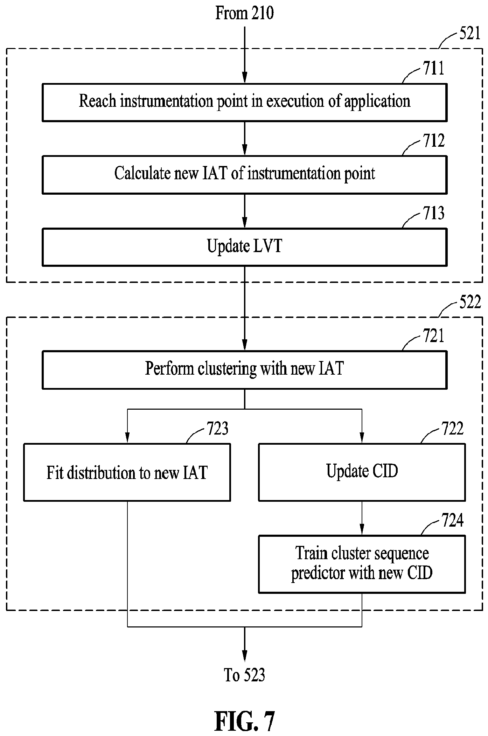

In operation 522, the electronic device may train the sequence predictor model based on the collected time information. For example, the electronic device may train the sequence predictor model for predicting an IAT for each instrumentation point. In operation 523, the electronic device may determine whether training of the sequence predictor model converges (e.g., is completed). For example, when the prediction accuracy of the sequence predictor model is greater than or equal to a threshold, the electronic device may determine that training has converged. In another example, when a model parameter that is updated during training of the sequence predictor model or a rate of change in prediction accuracy is less than a threshold, the electronic device may determine that training converges. The electronic device may determine whether training converges by using at least one of the prediction accuracy, the rate of change in the parameter, and the rate of change in prediction accuracy, which are described above. Training of the sequence predictor model is described with reference to FIG. 7. However, the generation of the predicted timestamp is not limited to the aforementioned example of cluster prediction. A machine learning model designed to predict a subsequent timestamp may be used and a statistical method instead of the machine learning model may also be used.

FIG. 7 illustrates collection of time information and training of a sequence predictor model. Operations described with reference to FIG. 7 are not limited to being performed in the described order and may vary depending on a design. Some of the described operations may be omitted, another operation may be added, and the order of operations may vary.

In operation 711, execution of an application by an electronic device may reach an instrumentation point in the application. The electronic device may identify and store calling context information at the arrived instrumentation point.

In operation 712, the electronic device may calculate a new arrival time for the arrival at the instrumentation point. For example, the electronic device may determine a difference between a previous LVT of the instrumentation point and a current timestamp (e.g., a timestamp indicating a time point of arrival at the instrumentation point) to be a new IAT (i.e., a time interval/duration between visits to the instrumentation point).

In operation 713, the electronic device may update the LVT. For example, the electronic device may replace the LVT with the current timestamp (the current visit time).

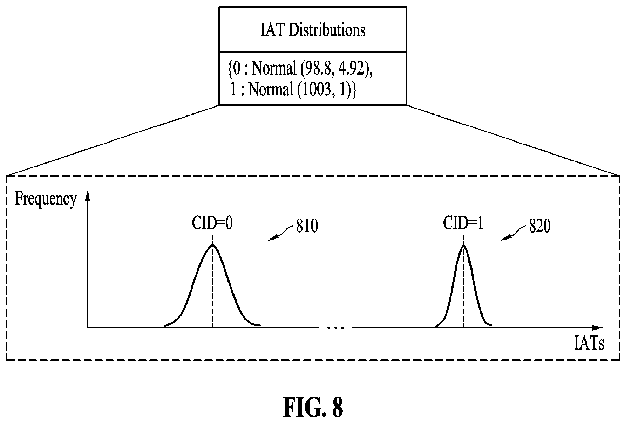

In operation 721, the electronic device may perform clustering with the new IAT. For example, the electronic device may cluster IATs including the new IAT for the instrumentation point based on arrival at the instrumentation point. For example, the electronic device may classify similar IATs (e.g., IATs of which a difference between each other is less than a threshold) among a group of IATs into the same cluster. When a variance value between IATs belonging to the same cluster exceeds a threshold variance, the electronic device may classify IATs into a separate cluster. FIG. 8 illustrates an example of a clustering result. A first distribution 810 is a distribution of the 0th cluster (CID=0) and a second distribution 820 is a distribution of the first cluster (CID=1). In FIG. 8, the horizontal axis represents an IAT and the vertical axis represents a frequency of occurrence of each IAT. For reference, when a function in which an instrumentation point is installed belongs to a hierarchical structure (e.g., when the function is called by a higher order function), the electronic device may perform hierarchical clustering.

In operation 722, the electronic device may update a CID. For example, the electronic device may add a CID to which a new IAT belongs to a CID sequence.

In operation 723, the electronic device may fit a distribution to the new IAT. For example, the electronic device may obtain a distribution for each cluster of IATs. The electronic device may recalculate distribution information (e.g., a mean value and a variance value) of a cluster to which the new IAT belongs.

In operation 724, the electronic device may train a cluster sequence predictor (e.g., a sequence predictor model) with a new CID. The electronic device may train, by using collected time information, a sequence predictor model that is set to output, for each instrumentation point, information of an IAT from a last visit time point of the instrumentation point to a subsequent visit time point. The information of an IAT may include, for example, a CID to which the IAT belongs. The sequence predictor model may be designed and trained to predict a cluster to which an inter-visit time from the current visit time to the next visit to the instrumentation point belongs based on a pattern in the CID sequence. The sequence predictor model may be implemented by a machine learning model and may include, for example, a neural network. However, the sequence predictor model is not limited thereto. The electronic device may train the sequence predictor model based on a result of clustering IATs. For example, some of the collected CID sequences may be set to a training input and a CID immediately after the CID sequences may be set to a training output. The electronic device may calculate a target function value (e.g., a loss) based on the training output and a result of inputting the training input to the sequence prediction model. The electronic device may train the sequence prediction model by iteratively updating a parameter (e.g., a connection weight of a neural network) of the sequence prediction model until the target function value converges.

The neural network may perform the subsequent cluster prediction described above by mapping input data and output data in a non-linear relationship to each other based on machine learning (e.g., deep learning). Deep learning is a machine learning scheme to solve various problems from a large data set, and through supervised or unsupervised learning, input data and output data may be mapped to each other. The neural network may include a plurality of layers, and nodes of the layers may be connected to nodes of a subsequent layer via links (e.g., a connection line) for transmitting an output signal. The number of links may correspond to the number of nodes included in the subsequent layer. To each node included in the hidden layer, an output of an activation function associated with weighted inputs of nodes included in a previous layer may be input. The weighted inputs are obtained by multiplying a weight to inputs of the artificial nodes included in the previous layer. The weight (e.g., a connection weight) may be referred to as a parameter of the neural network. For example, the neural network may receive a CID sequence (e.g., some sequences) in an input layer and may output a predicted value of a subsequent cluster (e.g., a label indicating a CID or a probability for each CID) in the output layer.

The electronic device may predict the next visit time point of an instrumentation point by using the trained sequence predictor model trained for multiple instrumentation points. For example, the electronic device may determine a subsequent IAT belonging to an output cluster, based on the sequence predictor model. The electronic device may predict a timestamp indicating the next visit time point based on the subsequent IAT and the LVT.

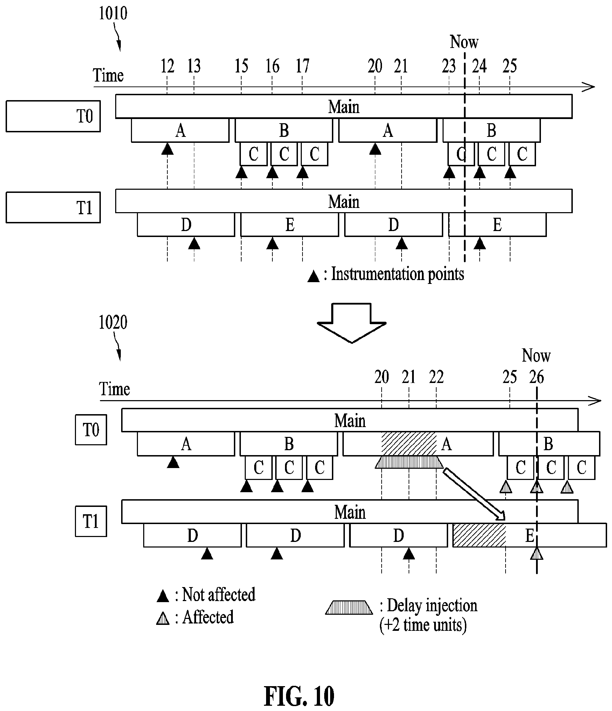

FIGS. 9 and 10 illustrate an example of applying a delay to a source instrumentation point.

Operations described with reference to FIG. 9 are not limited to being performed in the described order and may vary depending on a design. Some of the described operations may be omitted, another operation may be added, and the order of operations may vary.

In operation 931, an electronic device may generate a delay plan. The delay plan may include information about which instrumentation point to delay execution (among available instrumentation points) and an amount of time delay (or a scheme for generating delay times at runtime).

According to an example, in operation 931a, the electronic device may select a source task from a plurality of tasks of an application. In operation 931b, the electronic device may select a source instrumentation point based on the selected source task (i.e., selects the source instrumentation point based on it being in the selected source task). That is, the electronic device may select the source instrumentation point from among instrumentation points in the selected source task. However, the example is not limited thereto. For example, the reverse may be performed; the electronic device may first select a source instrumentation point (e.g., randomly) from the available instrumentation points and may select a task in which the source instrumentation point resides to be the source task.

In another example, the electronic device may find an instrumentation point having a variance of an IAT exceeds a threshold variance from a plurality of instrumentation points. As a variance of an IAT increases, the probability of detecting a causal relationship with an instrumentation point of another task may increase. Since a large variance indicates that an IAT changes significantly, it may be interpreted that interference (e.g., causal relationship, execution dependence, etc.) from another task may frequently occur in the instrumentation point. Accordingly, the electronic device may sequentially select, from instrumentation points, a source instrumentation point in an order (e.g., a descending order) from an instrumentation point having a large variance value to an instrumentation point having a small variance value for an IAT.

In another example, the electronic device may select a source instrumentation point from a plurality of instrumentation points based on a ratio of execution times of instrumentation points (e.g., of a task thereof), to the total execution time of an application. The electronic device may preferentially select a source instrumentation point based on having a high execution time. From the time information collected for each instrumentation point in operation 220 , ratios of execution times of instrumentation points (or tasks or commands thereof) relative to total execution time of an application may be calculated. The electronic device may sequentially select a source instrumentation point in order (e.g., a descending order) of execution time ratios from high to low.

In operation 931c, the electronic device may determine a delay amount to be applied to the current/selected source instrumentation point. The electronic device may randomly determine the delay amount. However, the example is not limited thereto. According to an example, the electronic device may determine the delay amount based on a distribution of IATs of instrumentation points. For example, when a target instrumentation point potentially having a causal relationship with respect to a source instrumentation point is identified, the electronic device may determine a delay amount to apply to the source instrumentation point based on a distribution of IATs of the target instrumentation point. The electronic device may maintain a behavior of an application while minimizing degradation of an analysis speed and may determine a meaningful but minimal delay amount compared to delay noise. Delay minimization may be helpful because, when an application has a dynamic scheduler or a timeout logic and an excessive delay amount is applied, the behavior of the application may change.

For example, the electronic device may determine the delay amount based on an upper limit (e.g., the 95th tail latency) of a 95% confidence interval in a distribution of IATs of the target instrumentation point. The electronic device may determine the delay amount to be latency corresponding to twice the upper limit of the 95% confidence interval of the distribution. In another example, the electronic device may determine a minimum delay based on the distribution of IATs of the target instrumentation point and may randomly determine the delay amount in a range greater than or equal to the minimum delay. In another example, the electronic device may gradually increase the delay amount for the source instrumentation point from the minimum delay that is determined based on a distribution of IATs of the target instrumentation point. The electronic device may identify a candidate of the target instrumentation point potentially having a causal relationship with the source instrumentation point, and then, may precisely determine causal relationship information (e.g., a causality score) while changing the delay amount. In addition, in an application including a lock-free queue, a causal relationship may only be observed in an empty state or a full state. The electronic device may apply a sufficient delay to an instrumentation point corresponding to a producer task of an application to induce the empty state. The electronic device may also apply the sufficient delay to a consumer task to induce the full state.

For reference, before the target instrumentation point having a causal relationship with respect to the source instrumentation point is identified, the electronic device may determine a preliminary (or candidate) target instrumentation point based on an order of visiting instrumentation points. The electronic device may record the visit order of instrumentation points by recording, on a global list, calling context of the instrumentation points in an order of visiting. The electronic device may also record a timestamp as well as the calling context on the global list. The electronic device may store the global list in a fixed size queue and may preferentially discard the oldest. The electronic device may determine the preliminary/candidate target instrumentation point to be an instrumentation point executed in a task different from the source task among subsequent instrumentation points, which are temporally adjacent to the source instrumentation point in the global list. The electronic device may determine the delay amount described above for the source instrumentation point based on a distribution of IATs of the preliminary target instrumentation points.

For example, an application (e.g., a program) has a characteristic of repeating an operation and the electronic device visits calling context in an order of A, B, C, D, and E while executing the application, the electronic device may highly likely revisit the calling context in the order of A, B, C, D, and E. The electronic device may exclude calling context of the same task as calling context A. For example, calling context B and D may remain. In other words, the electronic device may determine the preliminary target instrumentation point (e.g., instrumentation points corresponding to the calling contexts B and D) to be the instrumentation points executed in the task that is different from the source task among the instrumentation points visited during the adjacent time interval after visiting the source instrumentation point. This is because there is generally a higher probability of there being a causal relationship in a temporally adjacent instrumentation points. The electronic device may determine the delay amount to be a maximum value of latency (e.g., the upper limit of the 95% confidence interval) that is determined based on a distribution of IATs of each preliminary instrumentation point (e.g., instrumentation points corresponding to the calling context B and D) adjacent to the source instrumentation point (e.g., an instrumentation point corresponding to the calling context A) or a weighted sum of latencies. The weighted sum of latencies may be, for example, an average (e.g., a weighted average) of results of applying a reciprocal number of a temporal interval (e.g., an interval between timestamps) for the source instrumentation point as a weight to each latency. However, determination of the preliminary target instrumentation point is not limited thereto. The electronic device may arbitrarily apply a delay amount to the source instrumentation point and then may find a target instrumentation point in which a causal relationship is observed. As described, the electronic device may adjust the delay amount based on the method described above by using a distribution of the IATs of the found target instrumentation point.

In operation 932, the electronic device may execute a delay plan generated in operation 931 described above. The electronic device may apply a latency based on the delay amount to the selected source instrumentation point. FIG. 10 illustrates (i) a task flow 1010 (execution flow) before applying a delay amount to a source instrumentation point based on a delay plan and (ii) a task flow 1020 (execution flow) of the same execution path after applying a delay amount to the source instrumentation point. In FIG. 10, the source instrumentation point the instrumentation point in the body of the function A (aligned with and providing the 20th timestamp). A delay amount by a time unit of 2 may be applied to the source instrumentation point. The time unit may represent a unit time interval between timestamps.

In operation 933, the electronic device may predict the next timestamp of a source task based on a delay plan. According to an example, the electronic device may estimate a predicted timestamp of an instrumentation point that is different from the source instrumentation point, based on an analysis of previously collected time information. The electronic device may generated the predicted timestamp of instrumentation point executed in the source task after a delay in the source instrumentation point based on the determined delay amount.

For example, Table 2 describes a predicted timestamp and a visit timestamp to an instrumentation point by calling context information. For reference, Table 2 includes, for each row, a task ID (TID) a and a corresponding function stack (as the calling context information). This information is just an example of the many forms of calling context information. Moreover, other various pieces of information related to the context of a function call as described above may be used instead.

**Table 2**

| Calling context | Timestamps | Next Pred. |
|---|---|---|
| (T0, (main, A)) | ... 4 12 20 | 28→30 |
| (T0, (main, B, C)) | 31 | 24→26 |
| (T1, (main, D)) | ... 5 13 21 | 29 |
| (T1, (main, E)) | ... 0 8 16 | 24 |

In Table 2 and FIG. 10, T0 denotes a main task as the 0th task and T1 denotes a worker task as the first task. The label "main" denotes a main function and the labels A, B, C, D, and E denote respective functions. (T0, (main, A)) is a calling context information of the main function and the function A in the task T0. Since the source instrumentation point corresponding to (T0, (main, A)) is delayed by two time units in the 20th timestamp, commands (e.g., called functions) in the source task (e.g., the task T0) may be executed by being delayed by two time units. Accordingly, a subsequent timestamp corresponding to the source instrumentation point at (T0, (main, A)) may be predicted to be 30 obtained by adding 2 to 28 (28 obtained based on the sequence predictor model). Similarly, a subsequent timestamp corresponding to the instrumentation point at (T0, (main, B, C)) may be predicted to be 26 by adding 2 to 24.

In addition, the electronic device may generate a predicted timestamp for an instrumentation point executed by a task that is different from the source task. As described above, the electronic device may exclude a delay in the source instrumentation point for an instrumentation point of a different task and may generate a predicted timestamp based on a visit pattern of IATs at the instrumentation point. Referring to Table 2, since the electronic device visits the instrumentation point at (T1, (main, D)) at an interval of 5, the electronic device may predict a timestamp of 29. Similarly, the electronic device may predict a timestamp for an instrumentation point at (T1, (main, E)) to be 24.

In operation 934, a timestamp may be collected whenever execution arrives at the instrumentation point.

In operation 935, the electronic device may monitor, at each instrumentation point, whether there is a mismatch between a predicted timestamp thereof and a collected timestamp thereof. When there is no mismatch, the electronic device may continue to collect timestamp at operation 934. When the electronic device finds a mismatch between a predicted and collected timestamp of an instrumentation point (in a task other than the source task), the electronic device may determine that the instrumentation point has a causal relationship with the source instrumentation point. For example, the electronic device may determine a given instrumentation to be the target instrumentation point (among available/candidate instrumentation points) based on it having a mismatch between its recorded timestamp and its predicted timestamp. At an instrumentation point having a causal relationship with the source instrumentation point, a mismatch between a recorded timestamp and a predicted timestamp may occur due to a delay in the source instrumentation point.

**Table 3**

| Calling context | Timestamps | Next Pred. | Observed |
|---|---|---|---|
| (T0, (main, A)) | ... 4 12 20 | 30 | Not yet |
| (T0, (main, B, C)) | ... 7 89 15 16 17 23 | 26 | 26 |
| (T1, (main, D)) | ... 5 13 21 | 29 | Not yet |
| (T1, (main, E)) | ... 0 8 16 | 24 | 26 |

Referring to FIG. 10 and Table 3, in addition to instrumentation points executed in the source task, it may be interpreted (e.g., algorithmically inferred) that an instrumentation point corresponding to (T1, (main, E)) executed in a different task (e.g., the T1 task) is affected by a delay in the source instrumentation point. Although a timestamp predicted for an instrumentation point corresponding to (T1, (main, E)) is 24, a timestamp that is actually observed may be 26. Due to the delay in the source instrumentation point, execution of a command at the instrumentation point corresponding to (T1, (main, E)) may be delayed. In other words, the instrumentation point corresponding to (T1, (main, E)) may be determined to be a target instrumentation point, i.e., determined to have a causal relationship with respect to the source instrumentation point.

In operation 939, the electronic device may determine whether the instrumentation point having the mismatch described above is in the source task. A mismatch of an instrumentation point in a task other than the source task may imply that there is a causal relationship between the source instrumentation point and the target instrumentation point. On the other hand, a mismatch found in an instrumentation point that is in the source task may imply that timestamp prediction for that instrumentation point is inaccurate. This is because, theoretically, a subsequent instrumentation point should be delayed by the same amount as the amount of intentional delay in the source task. The electronic device may return to operation 522 and may train the sequence predictor model for predicting information of an IAT between visit time points for an instrumentation point based on detection of the mismatch between the recorded timestamp and the predicted timestamp at the instrumentation point executed in the source task.

In operation 936, the electronic device may calculate and update a causality score. The electronic device may calculate a causality score (causal relationship score) as causality information between the target instrumentation point and the source instrumentation point. When there is a previously calculated causality score, the electronic device may update the causality score based on a newly predicted timestamp and a newly recorded timestamp. Calculation of a causality score is described with reference to FIG. 11.

In operation 937, the electronic device may determine whether the causality score has sufficiently converged. According to an example, when the updated causality score maintains consistency (e.g., within a threshold range) with the previous causality score, the electronic device may determine that the causality score has converged. For example, the electronic device may determine whether the causality score has converged based on a history calculated causality scores. When an error between a predetermined number of causality scores previously calculated for the target instrumentation point and the currently calculated causality score is less than a threshold error, the electronic device may determine that an update of the causality score has sufficiently converged. When the update of the causality score for the target instrumentation point having a causality with respect to the source instrumentation point is determined to have sufficiently converged, the electronic device may complete causality analysis for the source instrumentation point.

In operation 938, when the causality score has not converged, the electronic device may determine whether to maintain the instrumentation point for the next analysis. According to an example, the electronic device may change the candidate instrumentation point during an analysis of causal relationship information while iteratively executing the application. For example, among a set of available instrumentation points, the electronic device may remove from the application an instrumentation point with a causality score that is lower than a threshold score. The electronic device may determine causal relationship information while executing the application having the remaining instrumentation points. When the electronic device determines to maintain the instrumentation point, the electronic device may repeat operations from operation 931.

FIG. 11 illustrates an example of calculating a causality score.

An electronic device according to an example may calculate a causality score as causal relationship information for a target instrumentation point having a causal relationship with respect to a source instrumentation point. The causality score may be a score indicating a relationship between a delay applied to the source instrumentation point and a delay occurring in the target instrumentation point. For example, the causality score may be a score indicating a level of triggering a delay at the target instrumentation point due to a delay applied to the source instrumentation point. The causality score may be a measure of dependence between the task of the source instrumentation point and the task of the target instrumentation point. As the causality score approaches 1, the causal relationship increases and as the causality score approaches 0, the causal relationship decreases.

For example, the electronic device may determine the causal relationship information between the source instrumentation point and the target instrumentation point, based on a comparison between a probability that a recorded timestamp for the target instrumentation point fits an original distribution of the target instrumentation point and a probability that the recorded timestamp for the target instrumentation point fits a delayed distribution of the target instrumentation point. FIG. 11 illustrates an original distribution 1110 of a target instrumentation point and a delayed distribution 1120 in which a delay by a delay amount 1170 is assumed. In graph 1100 of FIG. 11, the vertical axis represents a frequency for each IAT of the target instrumentation point and the horizontal axis represents an IAT. When the electronic device observes an IAT τ (tau) for the target instrumentation point, the electronic device may calculate a probability in which the IAT τ (tau) follows each distribution. P(X=τ) represents a probability that the IAT τ follows the original distribution 1110 and P(X'=τ) represents a probability that the IAT τ follows the delayed distribution 1120. FIG. 11 illustrates an example that P(X'=τ) is greater than P(X=τ). Since a probability of the IAT τ to follow the delayed distribution 1120 is high, the IAT τ observed at the target instrumentation point may be a time delayed due to a delay in the source instrumentation point. Accordingly, the electronic device may determine whether the IAT τ changes due to noise (random variation) at the target instrumentation point or is delayed due to the delay at the source instrumentation point, based on a probability distribution.

The electronic device may determine a causality score for the target instrumentation point (determined to have a causal relationship with the source instrumentation point) based on the delayed distribution 1120 of the target instrumentation point. For example, the electronic device may calculate the causality score with a value obtained by subtracting an area 1180 (e.g., an area under curve (AUC)) corresponding to a section between a point 1181 corresponding to the observed IAT τ and a point 1182 symmetrical to the point 1181 based on an average of the delayed distribution 1120 from 1 (e.g., 1-AUC). In other words, the electronic device may calculate the causality value by an area 1190 exceeding the point 1181 corresponding to the observed IAT τ and the symmetric point (the point 1182) at the delayed distribution 1120. The calculated causality score may be mapped to a calling context information pair of the source instrumentation point and the target instrumentation point and may be stored. Table 4 describes an example.

**Table 4**

| Calling context information | | Causality score |
|---|---|---|
| Source instrumentation point | Target instrumentation point | |
| (T0, (main, A)) | (T1, (main, E)) | 0.95 |

However, the example is not limited thereto, and the causality score may be calculated by, for example, min(1, (a delay amount occurring at the target instrumentation point / a delay amount applied to the source instrumentation point). Various metrics may be used to quantify an intensity/strength of an effect of a delay due to the causal relationship.

Although an example of delaying and analyzing execution at one source instrumentation point has been described, examples are not limited thereto. The electronic device may select two or more source instrumentation points and may perform a causal relationship analysis while delaying execution at each of the selected two or more source instrumentation points while executing an application.

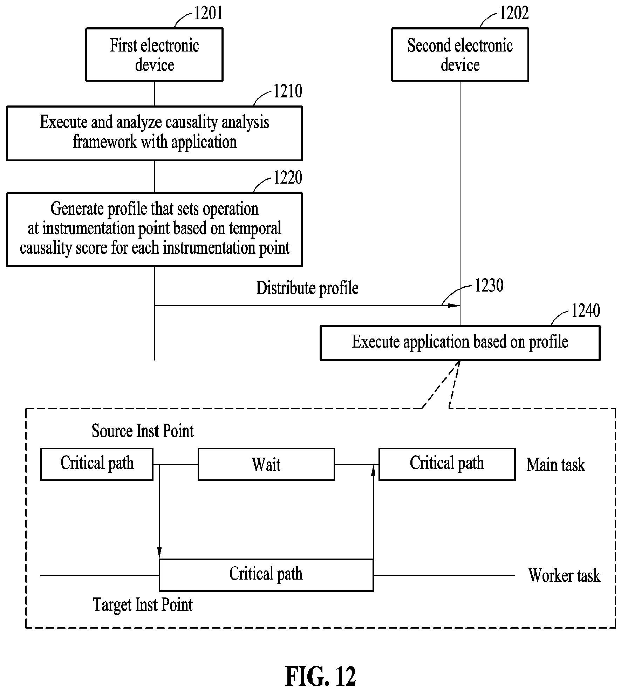

FIG. 12 illustrates an example of distributing a profile generated based on causal relationship information.

According to an example, a first electronic device 1201 (e.g., a server) may distribute a profile for executing an application based on causal relationship information analyzed for the application to a second electronic device 1202 (e.g., a mobile terminal). For example, in operation 1210, the first electronic device 1201 may execute and analyze a causality analysis framework with the application. The causality analysis framework may be a program including instructions to perform operations described with reference to FIGS. 1 to 11.

In operation 1220, the first electronic device 1201 may set a profile that sets an operation at an instrumentation point based a temporal causality score for each instrumentation point. The profile may include one or more settings for a device executing an application and may include a hardware setting. For example, when a processor includes a plurality of cores, the hardware settings may include one or more of a core selected to be used for execution of an application, a voltage of the core, a frequency of the core, and/or a number of cores. The profile according to an example may include dynamically changing and/or scheduling the hardware setting in correspondence with an instrumentation point among commands of the application. For example, the electronic device may generate a profile that triggers a core of a processor allocated to a source task to operate with power less than default power in an execution section (e.g., a predetermined time interval after reaching a source instrumentation point) corresponding to a source instrumentation point, based on a causality score between the source instrumentation point and a target instrumentation point exceeding a threshold score. The profile may be referred to as an execution policy.

In operation 1230, the first electronic device 1201 may distribute the generated profile to another electronic device via a communicator. FIG. 12 describes an example that the first electronic device 1201 distributes the generated profile to a second electronic device 1201.

In operation 1240, the second electronic device 1202 may execute an application based on the distributed profile. While the second electronic device 1202 executes the application, the second electronic device 1202 may operate by dynamically and individually allocating various cores (and/or other compute resources) to a plurality of tasks included in the application. For example, different cores may be allocated to each task, and the second electronic device 1202 may operate a core that is allocated to the source task at a low voltage in an execution section corresponding to the source instrumentation point. Accordingly, the second electronic device 1202 may operate efficiently in power by slowly operating at a low voltage for a task and a section in which a wait time occurs by dynamic voltage frequency scaling (DVFS), based on the distributed profile. Referring to the example of FIG. 12, the task in which a critical path is located may change during execution of the application. When execution of the application by the second electronic device 1202 reaches the source instrumentation point, the critical path may change from a main task to a worker task. In this case, since a wait time occurs in the main task while the critical path is located in the worker task, the power efficiency of the second electronic device 1202 may improve by operating a core allocated to the main task at low power. However, the profile is not limited thereto.

For example, the profile may be set to perform core scheduling based on a causal relationship analysis of the application. When the processor of the second electronic device 1202 includes heterogeneous multi cores, the profile may be set to dynamically change a core allocated to each task of the application for each instrumentation point among the multi cores included in the processor. For example, in a Big-Little architecture processor, a task may be moved between a Big core and a Little core. The profile may selectively allocate an efficient (E) core or a performance (P) core for each instrumentation point and each task. The profile may basically allocate the P core to the source task and may include a schedule that temporarily allocates the E core to the source task in the execution section corresponding to the source instrumentation point of the source task.

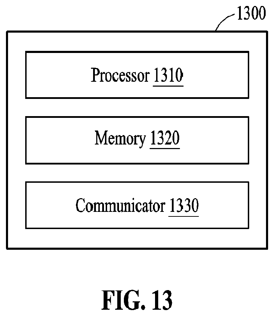

However, the example using causal relationship information is not limited to the profile. An additional example using causal relationship information is described with reference to FIG. 13.

FIG. 13 illustrates an example of a configuration of an electronic device.

An electronic device 1300 (e.g., the first electronic device 1201 of FIG. 12) according to an example may include a processor 1310, a memory 1320, and a communicator 1330.

The memory 1320 may store an application including a plurality of tasks, where each of the tasks is a sequential stream of instructions. The stored application may be a subject of the causal relationship analysis described above with reference to FIGS. 1 to 12.

The processor 1310 may install instrumentation points in the application. Among the installed instrumentation points, the processor 1310 may determine causal relationship information between a source instrumentation point and a target instrumentation point based on determining that a delay in the target instrumentation point is triggered or induced by a delay in the source instrumentation point. However, the operation of the processor 1310 is not limited thereto, and the processor 1310 may perform at least one of the operations described with reference to FIGS. 1 to 12 simultaneously or in a time series.

The communicator 1330 may include a communication circuit configured to establish communication by wire or wirelessly with another electronic device. The communicator 1330 may transmit a profile generated based on the causal relationship information to another electronic device. In addition, the communicator 1330 may receive an application, which is a subject of an analysis, from an external device.

For reference, an example in which the electronic device 1300 operates as a server is described herein. However, the example is not limited thereto. Operations for a causal relationship analysis between instrumentation points of the application described with reference to FIGS. 1 to 12 may be performed in various electronic devices (e.g., a mobile terminal).

The electronic device according to an example may actively collect time information for instrumentation points by applying the delay described above to a new application or a changed application. The electronic device may rapidly analyze causal relationship information between instrumentation points. Even if a situation does not easily occur in the currently configured application and/or system, the electronic device may induce and observe the situation by actively applying the delay as described above. The electronic device may have improved prediction accuracy in the new application and/or system.

The electronic device according to an example may use analyzed causal relationship information for the application for core scheduling in an operating system (OS). Based on causal relationship information between instrumentation points in each application executed in the OS, the electronic device may perform scheduling of tasks by using a command execution time of an instrumentation point for each task in the application and the causal relationship information between instrumentation points. For example, when a wait time is expected in the source task at the source instrumentation point due to a causal relationship between the source instrumentation point and the target instrumentation point, the electronic device may execute a command of another task first and execute a command of the source task later. In another example, the electronic device may temporarily suspend execution of a command for a task in which a long wait time is expected such that termination times of tasks become similar.

The electronic device may automate modeling of the application based on causal relationship information between instrumentation points of the application. For example, the electronic device may automatically build a dependency graph indicating a causal relationship between instrumentation points. The electronic device may automatically calculate a total execution time of the application in arbitrary hardware based on the dependency graph and the execution time of each command. The electronic device may automatically calculate the execution time of the application for various hardware models. Accordingly, the causal relationship information may be used as an indicator for designing optimal hardware for an arbitrary application.

The computing apparatuses, the electronic devices, the processors, the memories, the information output system and hardware, the storage devices, and other apparatuses, devices, units, modules, and components described herein with respect to FIGS. 1-13 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-Res, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above disclosure, the scope of the disclosure may also be defined by the appended claims, and all variations within the scope of the claims are to be construed as being included in the disclosure.

## Claims

1. An electronic device comprising:
one or more processors;
a memory storing instructions configured to cause the one or more processors to:
install instrumentation points in respective tasks of an application, the instrumentation points including a source instrumentation point installed in a source task and a target instrumentation point installed in a target task, wherein the source task and the target task are configured to execute in parallel on the one or more processors, and wherein each task comprises a respective sequence of instructions executable by the one or more processors, and
determine a measure of a causal relationship between the source instrumentation point and the target instrumentation point based on observation of a delay in the target instrumentation point induced by a delay amount generated by the source instrumentation point.

2. The electronic device of claim 1, wherein the instructions are further configured to cause the one or more processors to:
select the source task from among the tasks of the application,
select the source instrumentation point based on it being in the selected source task,
determine the delay amount, and
predict timestamps of instrumentation points to be executed in the source task after a delay of the source instrumentation point, wherein the delay is determined based on the determined delay amount.

3. The electronic device of claim 1 or 2, wherein the instructions are further configured to cause the one or more processors to train a model to predict an inter-arrival time between visits to an instrumentation point based on detection of a mismatch between a timestamp recorded by the instrumentation point and a timestamp predicted for the instrumentation point, wherein an inter-arrival time corresponds to a time between arrivals at the instrumentation point.

4. The electronic device of any of the previous claims, wherein the instructions are further configured to cause the one or more processors to select an instrumentation point having a variance of an inter-arrival time that exceeds a threshold variance to be the source instrumentation point from among the installed instrumentation points.

5. The electronic device of any of the previous claims, wherein the instructions are further configured to cause the one or more processors to determine the delay amount based on a distribution of inter-arrival times of the target instrumentation point.

6. The electronic device of any of the previous claims, wherein the instructions are further configured to cause the one or more processors to gradually increase the delay amount for the source instrumentation point from a minimum delay amount that is determined based on a distribution of inter-arrival times of the target instrumentation point.

7. The electronic device of any of the previous claims, wherein the measure of the causal relationship corresponds to a degree of a causal relationship between the delay amount generated by the source instrumentation point and the observed delay of the target instrumentation point, and/or
wherein the instructions are further configured to cause the one or more processors to determine the measure of the causal relationship based on a comparison between a probability that a recorded timestamp for the target instrumentation point follows an original distribution of the target instrumentation point and a probability that the recorded timestamp for the target instrumentation point follows a delayed distribution of the target instrumentation point.

8. The electronic device of any of the previous claims, wherein the instructions are further configured to cause the one or more processors to:
collect time information of the instrumentation points by iteratively executing the application,
estimate a predicted timestamp of an instrumentation point other than the source instrumentation point based on an analysis of the collected time information, and
select the target instrumentation point based on a mismatch between a recorded timestamp thereof and the predicted timestamp,
wherein the instructions are preferably further configured to cause the one or more processors to collect the time information for each of the plurality of instrumentation points identified based on calling context information.

9. The electronic device of claim 8, wherein the instructions are further configured to cause the one or more processors to:
train, by using the collected time information, a sequence predictor model that is set to output, for each instrumentation point, information of a respective inter-arrival time from a last visit time point of the instrumentation point to a subsequent visit time point, and
predict a next visit time point by using the trained sequence predictor model for the instrumentation points.

10. The electronic device of any of the previous claims, wherein the instructions are further configured to cause the one or more processors to:
perform clustering inter-arrival times including a new inter-arrival time for an instrumentation point, based on an arrival at the instrumentation point;
train a sequence predictor model based on a result of clustering the inter-arrival times; and
obtain a distribution of the inter-arrival times for each cluster,
and/or
generate a profile configured to control a processor core setting or a processor core allocation based on the causal relationship measure.

11. A processor-implemented method, comprising:
installing instrumentation points in an application comprising tasks, the instrumentation points including a source instrumentation point installed in a source task and a target instrumentation point installed in a target task, wherein each of the tasks is a sequential stream of instruction; and
determining causality information between the source instrumentation point and the target instrumentation point based on observation of a delay in the target instrumentation point triggered by a delay in the source instrumentation point among the plurality of instrumentation points.

12. The method of claim 11, wherein the determining of the causality information comprises:
selecting a source task from among the tasks of the application;
selecting the source instrumentation point based on it being in the source task;
determining a delay amount to be applied to the source instrumentation point; and
generating a predicted timestamp of instrumentation points to be executed in the source task after a delay in the source instrumentation point, wherein the delay is determined based on the determined delay amount.

13. The method of claim 11 or 12, wherein the determining of the causality information comprises:
collecting time information of the plurality of instrumentation points based on iteratively executing the application;
estimating a predicted timestamp of an instrumentation point that is not the source instrumentation point based on an analysis of the collected time information; and
determining an instrumentation point in which a mismatch between a recorded timestamp and the predicted timestamp is observed to be the target instrumentation point among the instrumentation points.

14. A processor-implemented method, preferably according to any of the claims 11-13, comprising:
inserting instrumentation code into execution units of an application, wherein the execution units are processes or threads some of which are configured to execute in parallel with respect to each other, the execution units including a source execution unit including inserted source instrumentation code and a target execution unit including inserted target instrumentation code;
executing the application, including:
executing the source instrumentation code, wherein each time the source instrumentation code is executed it induces pause times of pausing execution of the source execution unit; and
executing the target execution unit, wherein each time the target instrumentation code is executed a visit time is captured for the target execution unit, wherein each visit time corresponds to a time at which the target instrumentation code is executed; and
determining an extent to which the visit times are affected by the pause times,
wherein the pause times preferably vary randomly, and wherein the extent is preferably determined based on a distribution of the pause times and a distribution of the visit times.

15. The method of claim 14, wherein a second execution unit includes second target instrumentation code, wherein the executing the application further comprises executing the second target instrumentation code which captures second visit times of the second target instrumentation code, and wherein the method further comprises determining an extent to which the second visit times are affected by the pause times,
the method preferably further comprising:
determining that the target execution unit is causally related to the source execution unit based on the extent to which the visit times are affected by the pause times; and
determining that the second target execution unit is not causally related to the source execution unit based on the extent to which the second visit times are affected by the pause times.
